# EUROPEAN PATENT APPLICATION

(11) **EP 3 604 649 A1**
(43) Date of publication of application: **05.02.2020**
(21) Application number: 18776597.9
(22) Date of filing: 07.02.2018
(51) Int. Cl.: D03D 1/00, B29B 15/10, D03D 11/00

(54) **FIBROUS STRUCTURE AND FIBER-REINFORCED COMPOSITE MATERIAL**

(30) Priority: 31.03.2017 JP 2017071648
(71) Applicant: Kabushiki Kaisha Toyota Jidoshokki, Kariya-shi, Aichi 448-8671 (JP)
(72) Inventor: TAKEI, Hiroyuki, Kariya-shi Aichi 448-8671 (JP)
(74) Representative: TBK
(86) International application number: PCT/JP2018/004260
(87) International publication number: WO 2018/179878

(57) **Abstract**

A fiber structure includes a non-reinforced portion and a reinforced portion that are continuous with each other in a longitudinal direction. A weft yarn forming the reinforced portion is thicker than a weft yarn forming the non-reinforced portion. A pitch between yarns in the reinforced portion is smaller than a pitch between yarns in the non-reinforced portion.

## Description

### TECHNICAL FIELD

The present invention relates to a fiber structure including a multi-layered fabric that includes a warp layer and a weft layer, and a fiber-reinforced composite including the fiber structure used as a reinforcement base material.

### BACKGROUND ART

Fiber-reinforced composites have been widely used as lightweight structural components. A fiber-reinforced composite including a reinforcement base material impregnated with a matrix resin is used as a structural component for rockets, aircrafts, automobiles, ships, and architectures. Some fiber-reinforced composites have thickness that is varied depending on a shape of an object to which the fiber-reinforced composite is applied.

An example of a fiber structure for a fiber-reinforced composite with thickness varied is disclosed in Patent Document 1. As shown in FIG. 5, a three-dimensionally woven fabric 80 disclosed in Patent Document 1 is woven out of warp yarns 81 that are bundled into a plurality of groups, weft yarns 82 that are arranged into a plurality of layers, and binding yarns 83 that bind the weft yarns 82 in outer layers. The three-dimensionally woven fabric 80 includes a taper portion 84 that has varying thickness in the weaving direction. The taper portion 84 is formed in such a manner that the warp yarns 81 bundled into pluralities of groups are separated by the group one after another and each of the weft yarns 82 is newly inserted between the warp yarns 81 separated by the group. The taper portion 84 is formed into a shape that has a gradually increasing thickness by gradually increasing the number of layers in the fabric from a thin portion 85 to a thick portion 86.

### Citation List

### Patent Document

Patent Document 1: Japanese Patent Application Publication No. H09-157993

### SUMMARY OF INVENTION

### Technical Problem

However, the three-dimensionally woven fabric 80 disclosed in Patent Document 1 is enormously complicated to fabricate because the warp yarns 81 bundled into the pluralities of the groups need to be separated by the group and each of the weft yarns 82 needs to be inserted between the warp yarns 81 separated by the group in order to form the taper portion 84. Moreover, in the three-dimensionally woven fabric 80, the warp yarns 81 bundled into the pluralities of the groups are required to form the thin portion 85 and also the number of the weft yarns 82 needs to be increased gradually to form the taper portion 84 and the thick portion 86. Overall, the three-dimensionally woven fabric 80 is tremendously complicated to fabricate.

An objective of the present invention is to provide a fiber structure and a fiber-reinforced composite that are easily woven even when the fiber structure and the fiber-reinforced composite include part having varying thickness.

### Solution to Problem

A fiber structure to solve the above problems is a fiber structure that is used as a reinforcement base material of a fiber-reinforced composite and that includes a multi-layered fabric including a warp layer and a weft layer. When one direction refers to a direction in which warp yarns are adjacent to each other in the warp layer or weft yarns are adjacent to each other in the weft layer, the fiber structure includes a first portion, and a second portion that is continuous with the first portion along the one direction. Each of the warp yarns forming the second portion is thicker than each of the warp yarns forming the first portion, and/or each of weft yarns forming the second portion is thicker than each of weft yarns forming the first portion. When a pitch between the yarns refers to a distance between main axes of the yarns adjacent to each other in the one direction, the pitch between the yarns in the second portion is smaller than the pitch between the yarns in the first portion.

According to the fiber structure described above, by varying the pitch between yarns in the first portion from the pitch between yarns in the second portion, the width of the yarn in the first portion is varied from the width of the yarn in the second portion where the width of the yarn corresponds to a dimension of the yarn in a direction orthogonal to a thickness direction. The variation in the width of the yarns accordingly varies the thickness of the yarns in the first and second portions. Then, the variation in the thickness of the yarns accordingly varies the thickness in the second portion from the thickness in the first portion. The fiber structure described above is easily woven with the loom and also the fabrication cost may be reduced, in comparison with a case where the thickness of a multi-layered fabric is varied by varying the number of yarns in the thickness direction of a multi-layered fabric.

In the fiber structure described above, fiber layers stacked in the thickness direction of the multi-layered fabric are bound together by a binder yarn in the thickness direction. When a distance between portions of the binder yarn refers to the distance between the portions, of the binder yarn, adjacent to each other in the one direction within a range of a thickness of the multi-layered fabric, the distance between the portions of the binder yarn in the second portion is different from the distance between the portions of the binder yarn in the first portion.

According to the fiber structure described above, the binder yarn proceeds through the multi-layered fabric in the thickness direction along the warp yarns or the weft yarns stacked in the thickness direction. When the pitch between the warp yarns or the weft yarns that are arranged in the one direction in the first portion is different from the pitch between the warp yarns or the weft yarns that are arranged in the one direction in the second portion, the distance between the binder yarns in the first portion is also different from the distance between the binder yarns in the second portion. Thereby, even when the pitch between the yarns and the thickness in the first portion is different the pitch between the yarns and the thickness in the second portion, the first portion and the second portion may be bound together by the binder yarn in the thickness direction.

A fiber-reinforced composite to solve the above problems is a fiber-reinforced composite including a reinforcement base material formed of a fiber structure with a matrix resin impregnated into. The fiber structure is the fiber structure according to claim 1 or 2.

According to the fiber structure described above, by varying the pitch between the yarns arranged in the one direction in the first portion from the pitch between the yarns arranged in the one direction in the second portion, the thickness of the first portion may be varied from the thickness of the second portion. In this way, the reinforcement base material formed of the fiber structure in the fiber-reinforced composite is easily woven with the loom and also the fabrication cost may be reduced.

### Advantageous Effects of Invention

A fiber structure and a fiber-reinforced composite according to the present invention are easily woven even when the fiber structure and the fiber-reinforced composite include part having varying thickness.

### BRIEF DESCRIPTION OF DRAWINGS

FIG. 1 is a cross-sectional view showing a fiber-reinforced composite according to an embodiment of the present invention.
FIG. 2 is an enlarged cross-sectional view showing a non-reinforced portion and a reinforced portion of a fiber structure including a multi-layered fabric.
FIG. 3 is a schematic view of a loom.
FIG. 4A is a partial cross-sectional view showing a state before a weft yarn is beaten with a reed.
FIG. 4B is a partial cross-sectional view showing a state in which the weft yarn is beaten with the reed to form the non-reinforced portion.
FIG. 4C is a partial cross-sectional view showing a moving distance of the woven fabric to form the reinforced portion.
FIG. 4D is a partial cross-sectional view showing a state in which the weft yarn is beaten with the reed to form the reinforced portion.

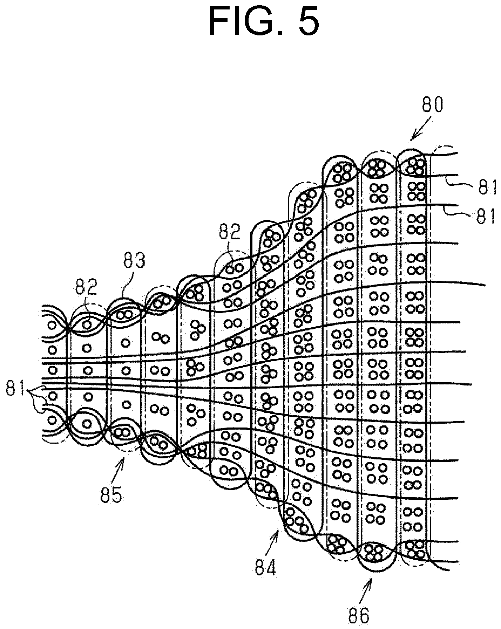

FIG. 5 is an enlarged cross-sectional view showing a non-reinforced portion and a reinforced portion of a fiber structure formed of a single-layered fabric.

### DESCRIPTION OF EMBODIMENTS

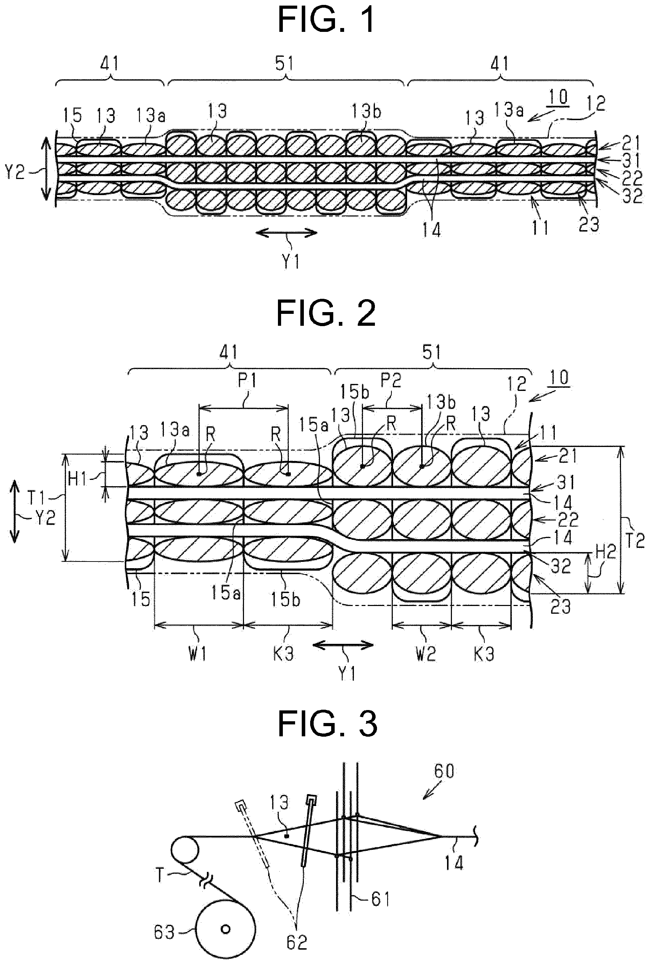

A fiber structure and a fiber-reinforced composite according to an embodiment of the present invention will now be described with reference to FIGs. 1 to 4D.

As shown in FIG. 1, a fiber-reinforced composite 10 includes a fiber structure 11 that includes a multi-layered fabric and is combined with a matrix resin 12. A thermosetting epoxy resin, for example, is used as the matrix resin. The fiber structure 11 includes weft yarns 13 formed of a reinforcement fiber and warp yarns 14 formed of a reinforcement fiber. Each of the weft yarns 13 and each of the warp yarns 14 extend in the directions orthogonal to each other. According to the embodiment, a carbon fiber is used as the reinforcement fiber. All of the warp yarns 14 have the same yarn fineness, and all of the weft yarns 13 have the same yarn fineness, where the yarn fineness denotes a weight per unit length. In addition, each of the weft yarns 13 and the warp yarns 14 is a continuous yarn formed of a fiber bundle of the carbon fibers.

The fiber structure 11 includes a first weft layer 21 in which a plurality of the weft yarns 13 is arranged parallel to one another, a second weft layer 22 disposed below the first weft layer 21, and a third weft layer 23 disposed below the second weft layer 22. The first to the third weft layers 21, 22, 23 are fiber layers forming a multi-layered fabric. The fiber structure 11 also includes a first warp layer 31 in which a plurality of the warp yarns 14 is arranged parallel to one another and a second warp layer 32 disposed below the first warp layer 31. Each of the first and second warp layers 31 and 32 is a fiber layer forming a multi-layered fabric.

In the fiber structure 11, the first weft layer 21, the first warp layer 31, the second weft layer 22, the second warp layer 32, and the third weft layer 23 are stacked from the top to the bottom in this order. The first weft layer 21, the first warp layer 31, the second weft layer 22, the second warp layer 32, and the third weft layer 23 are bound by a binder yarn 15 that forms part of the warp yarns. The binder yarn 15, formed of a non-reinforcement fiber, is used for retaining the shape of the fiber structure 11. The binder yarn 15 is arranged in parallel with the warp yarns 14. At the same time, the binder yarn 15 is arranged to proceed around the outer surface of the weft yarn 13 in the first weft layer 21 at a position above the warp yarn 14 in the uppermost layer, i.e. the first warp layer 31, forming the fiber structure 11. The binder yarn 15 is also arranged to proceed around the outer surface of the weft yarn 13 in the third weft layer 23 at a position below the warp yarn 14 in the lowermost layer, i.e. the second warp layer 32. The binder yarn 15 forms part of the warp yarns of the multi-layered fabric.

The fiber structure 11 as described above is formed with the multi-layered weave in which a weft yarn 13 is inserted between the warp yarns 14 in a state in which a required number of the warp yarns 14 and a required number of the binder yarns 15 are arranged. The fiber structure 11 including the multi-layered fabric as described above is impregnated with the matrix resin and hardened, which is combined into the fiber-reinforced composite 10. In other word, the fiber-reinforced composite 10 includes the reinforcement base material formed of the fiber structure 11 with the matrix resin impregnated into. The resin transfer molding (RTM) method, for example, is used as a method of impregnating and hardening the matrix resin.

By impregnating and hardening the matrix resin 12 into the fiber structure 11, the weft yarns 13 and the warp yarns 14 in the fiber structure 11 are combined with the matrix resin 12 to be formed into the fiber-reinforced composite 10. The fiber-reinforced composite 10 is used as, for example, an outer panel of a mobile body such as an aircraft and a passenger vehicle.

In the fiber structure 11, a direction in which a plurality of weft yarns 13 is arranged is referred to as a longitudinal direction Y1, and a direction in which the first weft layer 21, the first warp layer 31, the second weft layer 22, the second warp layer 32, and the third weft layer 23 are stacked is referred to as a thickness direction Y2. Note that the longitudinal direction Y1 is also a direction in which a main axis of the warp yarn 14 extends. A dimension in the thickness direction Y2 of the fiber structure 11 is referred to as a thickness. The fiber structure 11 includes a non-reinforced portion 41 as part of the fiber structure 11 along the longitudinal direction Y1, and a reinforced portion 51 as part of the fiber structure 11 excluding the non-reinforced portion 41 along the longitudinal direction Y1. The non-reinforced portion 41 corresponds to a first portion, and the reinforced portion 51 corresponds to a second portion.

The non-reinforced portion 41 and the reinforced portion 51 are formed continuously with each other in the longitudinal direction Y1, that is, the non-reinforced portion 41 is continuous with the reinforced portion 51 in one direction. In the present embodiment, the one direction refers to a direction in which the weft yarns 13 are adjacent to each other in each of the first to the third weft layers 21 to 23. The thickness of the non-reinforced portion 41 is constant along the longitudinal direction Y1. The thickness of the reinforced portion 51 is constant along the longitudinal direction Y1, and is greater than the thickness of the non-reinforced portion 41.

As shown in FIG. 2, the weft yarn 13 that forms the non-reinforced portion 41 is referred to as a non-reinforced-portion weft yarn 13a. The non-reinforced-portion weft yarn 13a has a horizontally elongated flat shape as viewed in the cross section orthogonal to a main axis R of the yarn. The maximum dimension of the non-reinforced-portion weft yarn 13a along the longitudinal direction Y1 is referred to as a width W1. The maximum dimension of the non-reinforced-portion weft yarn 13a along the thickness direction Y2 is referred to as a thickness H1. In the non-reinforced portion 41, a distance between any two of the main axes R of the non-reinforced-portion weft yarns 13a adjacent to each other in the longitudinal direction Y1 is referred to as a pitch P1 between the yarns in the non-reinforced portion 41.

The weft yarn 13 that forms the reinforced portion 51 is referred to as a reinforced-portion weft yarn 13b. The non-reinforced-portion weft yarn 13a and the reinforced-portion weft yarn 13b are the weft yarns 13 having the same yarn fineness. The only difference between the non-reinforced-portion weft yarn 13a and the reinforced-portion weft yarn 13b is the shape in the cross-sectional view. The reinforced-portion weft yarn 13b also has a horizontally elongated flat shape as viewed in the cross section orthogonal to the main axis R of the yarn. However, the width of the flat shape of the reinforced-portion weft yarn 13b is smaller than the width of the flat shape of the non-reinforced-portion weft yarn 13a. The maximum dimension of the reinforced-portion weft yarn 13b along the longitudinal direction Y1 is referred to as a width W2. The maximum dimension of the reinforced-portion weft yarn 13b along the thickness direction Y2 is referred to as a thickness H2.

In the reinforced portion 51, when a distance between any two of the main axes R of the reinforced-portion weft yarns 13b adjacent to each other in the longitudinal direction Y1 is referred to as a pitch P2 between the yarns in the reinforced portion 51, the pitch P2 between the yarns in the reinforced portion 51 (corresponding to a pitch between yarns in the second portion) is smaller than the pitch P1 between the yarns in the non-reinforced portion 41 (corresponding to a pitch between yarns in the first portion). As a result, the width W2 of the reinforced-portion weft yarn 13b is smaller than the width W1 of the non-reinforced-portion weft yarn 13a, and the thickness H2 of the reinforced-portion weft yarn 13b in the reinforced portion 51 is greater than the thickness H1 of the non-reinforced-portion weft yarn 13a in the non-reinforced portion 41. In other word, the thickness of the reinforced-portion weft yarn 13b arranged in the longitudinal direction Y1 is greater than the thickness of the non-reinforced-portion weft yarn 13a arranged in the longitudinal direction Y1. Thus, as to the non-reinforced portion 41 and the reinforced portion 51, a thickness T1 of the non-reinforced portion 41 including the non-reinforced-portion weft yarn 13a is smaller than a thickness T2 of the reinforced portion 51 including the reinforced-portion weft yarn 13b. The reinforced portion 51 is thus thicker than the non-reinforced portion 41.

The amount of the weft yarns 13 per unit length in the longitudinal direction Y1 is greater in the reinforced portion 51 than in the non-reinforced portion 41, and the yarn density is thus greater in the reinforced portion 51 than in the non-reinforced portion 41.

As to the binder yarn 15 that turns around many times in proceeding in the longitudinal direction Y1 of the fiber structure 11, a portion of the binder yarn 15 that proceeds through the fiber structure 11 in the thickness direction Y2 is referred to as a straight portion 15a, and a portion of the binder yarn 15 that proceeds along the outer surface of the weft yarn 13 and around at both ends of the thickness direction Y2 of the fiber structure 11 is referred to as a turning around portion 15b. In this case, a distance between any two straight portions 15a adjacent to each other in the direction in which the binder yarn 15 is woven, i.e. the longitudinal direction Y1, is referred to as a distance K3 between the straight portions 15a of the binder yarn 15. Since the width of the non-reinforced-portion weft yarn 13a is greater than the width of the reinforced-portion weft yarn 13b, the distance K3 between the straight portions 15a of the binder yarn 15 is greater in the non-reinforced portion 41 than in the reinforced portion 51.

A method of forming the fiber structure 11 will now be described.

In a loom 60 as shown in FIG. 3, the warp yarns 14 let off from the loom 60 are guided to a heddle 61 and a reed 62. The inserted weft yarn 13 is beaten with the reed 62, and a woven fabric T is wound around a take-up roller 63.

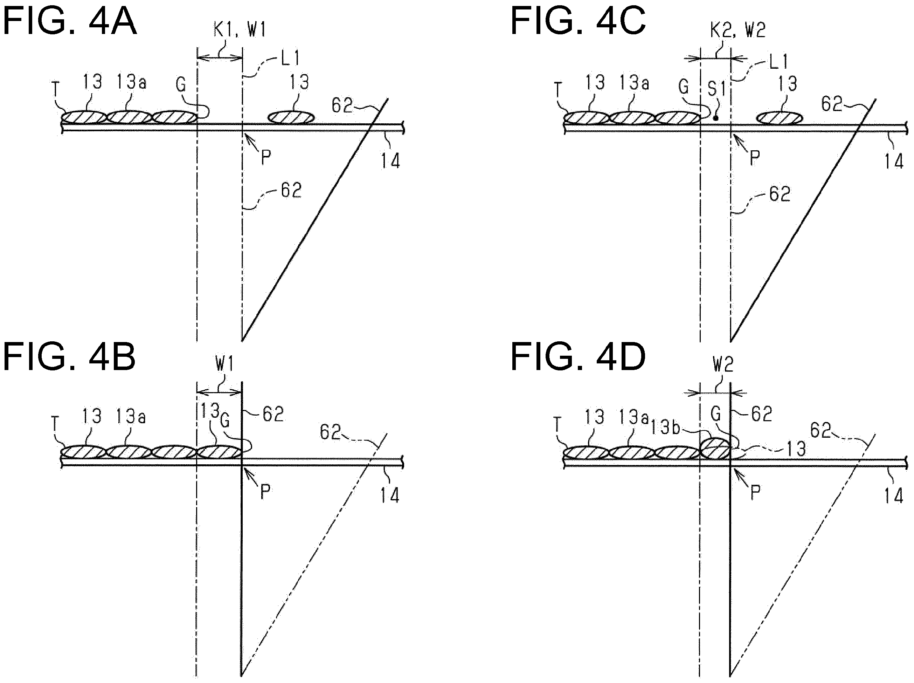

In forming the fiber structure 11 with the loom 60, the weft yarn 13 is inserted and beaten with the reed 62. In the following description, all the weft yarns 13 to be inserted have a horizontally elongated flat shape having the same width as the width W1 of the non-reinforced-portion weft yarn 13a. A beating point P is located at a position indicated with a double-dashed chain line L1 shown in FIG. 4A. The beating point P is always located at the same position. The weft yarn 13 is inserted at a position away from the beating point P, i.e. the double-dashed chain line L1, on a side away from the woven fabric T.

In forming the non-reinforced portion 41, the woven fabric T that is already woven is taken up with the take-up roller 63, and then an end G of the woven fabric T is moved from the beating point P toward the take-up roller 63. The moving distance of the woven fabric T that is moved to form the non-reinforced portion 41 is referred to as a first moving distance K1. The first moving distance K1 corresponds to the width W1 of the non-reinforced-portion weft yarn 13a in dimension.

The moving distance of the woven fabric T may be changed by adjusting the taking-up speed of the take-up roller 63. For example, an increase in the taking-up speed of the take-up roller 63 increases the moving distance of the woven fabric T per a pre-determined time, whereas a decrease in the taking-up speed of the take-up roller 63 decreases the moving distance of the woven fabric T per the pre-determined time.

The weft yarn 13 is inserted and beaten with the reed 62 at the beating point P, as shown in FIG. 4B. In this case, the weft yarn 13 does not project from the beating point P. The weft yarn 13 maintains the width W1 without being pressed. In this way, the non-reinforced-portion weft yarn 13a forms a part of the non-reinforced portion 41.

Subsequently, the reinforced portion 51 is formed. The moving distance of the woven fabric T in forming the reinforced portion 51 with the take-up roller 63 is made smaller than the first moving distance K1 of the woven fabric T in forming the non-reinforced portion 41, as shown in FIG. 4C. The distance of the woven fabric T moved to form the reinforced portion 51 is referred to as a second moving distance K2. The second moving distance K2 is smaller than the width W1 of the non-reinforced-portion weft yarn 13a in dimension. The second moving distance K2 corresponds to the width W2 of the reinforced-portion weft yarn 13b in dimension. When the woven fabric T is taken up, a space S1 corresponding to the width W2 in dimension is formed between the end G of the woven fabric T and the beating point P.

As shown in FIG. 4D, when the weft yarn 13 is inserted and beaten with the reed 62 at the beating point P, the weft yarn 13 is pressed with the reed 62 by the amount that the weft yarn 13 projects from the beating point P, as indicated with the double-dashed chain line L1 in FIG. 4D. As a result, the reinforced-portion weft yarn 13b is formed to have the same width as the width W2 that is the width of the reinforced-portion weft yarn 13b. When the predetermined number of the reinforced-portion weft yarn 13b to form the reinforced portion 51 is woven, a part of the reinforced portion 51 is complete.

The operation of the fiber structure 11 will be now described.

In the fiber structure 11, regarding the reinforced portion 51 the strength of which is desired to be enhanced, the cross-sectional shape of the reinforced-portion weft yarn 13b to form the reinforced portion 51 is more elongated vertically than the cross-sectional shape of the non-reinforced-portion weft yarn 13a to form the non-reinforced portion 41. In the non-reinforced portion 41 formed of the non-reinforced-portion weft yarn 13a that has the same yarn fineness as the reinforced-portion weft yarn 13b has, the cross-sectional shape of the non-reinforced-portion weft yarn 13a is a horizontally elongated flat shape. The thickness of the reinforced portion 51 is thus greater than the thickness of the non-reinforced portion 41, that is, the strength is more enhanced in the reinforced portion 51 than in the non-reinforced portion 41.

The embodiment described above has the following advantages.
(1) In the fiber structure 11, the reinforced portion 51 and the non-reinforced portion 41 are formed in such a manner that the pitch P2 between the yarns in the reinforced portion 51 is smaller than the pitch P1 between the yarns in the non-reinforced portion 41. Because of this, the thickness H2 of the reinforced-portion weft yarn 13b may be formed greater than the thickness H1 of the non-reinforced-portion weft yarn 13a. In other words, the reinforced portion 51 may be formed thicker than the non-reinforced portion 41. Since the non-reinforced portion 41 and the reinforced portion 51 are woven in the same manner using the weft yarns 13 and the warp yarns 14, which does not require to vary the way to move the heddle 61 between the non-reinforced portion 41 and the reinforced portion 51, the fiber structure 11 is easily woven with the loom 60, in comparison with a case where varying the thickness between the reinforced portion 51 and the non-reinforced portion 41 requires varying the weaving method between the reinforced portion 51 and the non-reinforced portion 41. In the fiber structure 11, the yarn to be used has the same yarn fineness in the non-reinforced portion 41 and the reinforced portion 51, and the number of the yarns in the thickness direction Y2 is the same in the non-reinforced portion 41 and the reinforced portion 51. In comparison with a case where the thickness is varied between the reinforced portion 51 and the non-reinforced portion 41 by varying the yarn fineness between the reinforced portion 51 and the non-reinforced portion 41 or by varying the number of inserting weft yarns 13 in the reinforced portion 51 from that in the non-reinforced portion 41, the fiber structure 11 is easily woven with the loom 60 and also the fabrication cost may be reduced.
(2) The reinforced portion 51 is made thicker and thus reinforced by increasing the weft density of the weft yarn 13 greater than the weft density of the non-reinforced portion 41. This allows saving time and effort and also avoiding an increase in weight in comparison with a case where a reinforcement fabric different from the fiber structure 11 is joined to a portion to be reinforced.
(3) The reinforced portion 51 is formed by adjusting the taking-up speed of the woven fabric T with the take-up roller 63 and by allowing the weft yarn 13 to be inserted into a position where the weft yarn 13 is pressed when beaten with the reed 62, while the fabric is being woven with the loom 60. The reinforced portion 51 is formed without changing the weaving method.
(4) The binder yarn 15 proceeds through the non-reinforced portion 41 and the reinforced portion 51 along the weft yarns 13 stacked in the thickness direction. When the pitch between the weft yarns 13 in the non-reinforced portion 41 is different from the pitch between the weft yarns 13 in the reinforced portion 51, the distance K3 between the straight portions 15a of the binder yarn 15 in the non-reinforced portion 41 is also different from the distance K3 between the straight portions 15a of the binder yarn 15 in the reinforced portion 51. Thus, the non-reinforced portion 41 and the reinforced portion 51 that even have different pitches and different thicknesses from each other may be bound by the binder yarn 15 in the thickness direction.
(5) The fiber structure 11 is formed of the weft yarns 13 and the warp yarns 14 having the same yarn fineness, and thus does not require other types of yarns to be added in order to increase the thickness. In comparison with a case where the thickness of the fiber structure 11 is varied by making the number of inserting weft yarns 13 different, the fiber-reinforced composite 10 using the fiber structure 11 as the reinforcement base material is thus easily woven with the loom 60 and also the fabrication cost may be reduced.

The following modifications may be made to the embodiment described above.
- The thickness of the reinforced portion 51 in the longitudinal direction Y1 may be varied by varying the thickness between or among the reinforced-portion weft yarns 13b that form the reinforced portion 51. In this case, as to the binder yarn 15 proceeding through the reinforced portion 51, the distance K3 between the straight portions 15a of the binder yarn 15 may be varied depending on the thickness of the reinforced-portion weft yarn 13b.
- The embodiment described above is formed by varying the pitch of the weft yarn 13 in the one direction between the non-reinforced portion 41 and the reinforced portion 51 in the first to the third weft layers 21 to 23, i.e. the longitudinal direction Y1, where the one direction is defined as a direction in which the weft yarns 13 are adjacent to each other. However, the scope of the present invention is not limited to the embodiment described above. The fiber structure 11 may be formed in such a manner that the non-reinforced portion 41 is continuous with the reinforced portion 51 in a direction of the warp yarns 14 adjacent to each other in one direction in the first warp layer 31 and the second warp layer 32, where the one direction is defined as a direction in which the warp yarns 14 are adjacent to each other. Then, the warp yarns 14 in the reinforced portion 51 may be made thicker than the warp yarns 14 in the non-reinforced portion 41, and the pitch between the warp yarns 14 in the reinforced portion 51 may be varied from the pitch between the warp yarns 14 in the non-reinforced portion 41. In this case, the pitch between the warp yarns 14 is adjusted by adjusting the reed density.

Alternatively, in the first to the third weft layers 21 to 23, the non-reinforced portion 41 and the reinforced portion 51 may be formed in a direction of the weft yarns 13 adjacent to each other in one direction, where the one direction is defined as a direction in which the weft yarns 13 are adjacent to each other. The weft yarns 13 and the warp yarns 14 in the reinforced portion 51 may be made thicker than the weft yarns 13 and the warp yarns 14 in the non-reinforced portion 41, and thus the pitch between the weft yarns 13 and the pitch between the warp yarns 14 in the reinforced portion 51 may be varied from the pitch between the weft yarns 13 and the pitch between the warp yarns 14 in the non-reinforced portion 41.

Alternatively, in the first warp layer 31 and the second warp layer 32, the non-reinforced portion 41 and the reinforced portion 51 may be formed in a direction of the warp yarns 14 adjacent to each other in one direction where the one direction is defined as a direction in which the warp yarns 14 are adjacent to each other. The weft yarns 13 and the warp yarns 14 in the reinforced portion 51 may be made thicker than the weft yarns 13 and the warp yarns 14 in the non-reinforced portion 41. Thus, the pitch between the weft yarns 13 and the pitch between the warp yarns 14 in the reinforced portion 51 may be varied from the pitch between the weft yarns 13 and the pitch between the warp yarns 14 in the non-reinforced portion 41.

In the embodiment described above, the weft yarn 13 is pressed by adjusting the moving speed of the woven fabric T with the take-up roller 63 and thus adjusting the projecting distance of the weft yarn 13 from the beating point P. However, the method of pressing the weft yarn 13 may be changed. For example, the pressed distance of the weft yarn 13 may be adjusted by changing the beating stroke of the reed 62.

In the embodiment described above, the non-reinforced-portion weft yarn 13a is not pressed when beaten with the reed 62. However, the thickness may be adjusted by pressing the non-reinforced-portion weft yarn 13a.

In the fiber structure 11 including the multi-layered fabric, the number or the order of the weft layers or the warp layers to be stacked may be modified as necessary.

When the fiber structure 11 is used as the reinforcement base material of the fiber-reinforced composite 10, the type of matrix resin or the method of forming the fiber-reinforced composite 10 are not restricted in particular.

As to the fiber bundle to form the weft yarn 13 and the warp yarn 14, fibers appropriate to the physical properties required for the fiber-reinforced composite 10 may be used: for example, high strength organic fibers such as aramid fibers, poly-p-phenylene benzobisoxazole fibers, and ultrahigh molecular weight polyethylene fibers, and inorganic fibers such as glass fibers and ceramic fibers.

The weft yarn 13 and the warp yarn 14 may be a spun yarn, not a continuous yarn.

The yarn fineness of the weft yarn 13 and the warp yarn 14 does not have to be the same, but may be different.

The shape of the weft yarn 13 to be inserted is not limited to the horizontally elongated flat shape. For example, the weft yarn 13 may have a flat shape, a circular shape, or a vertically elongated flat shape.

The binder yarn 15 may be formed of a reinforcement fiber.

The binder yarn 15 may form part of the weft yarns.

The binder yarn 15 does not have to turn around at the outermost layers at both ends of the thickness direction of the multi-layered fabric, but may turn around at a midpoint in the thickness direction.

The following will additionally describe the technical idea that is grasped from the embodiment and modifications described above.
(1) The fiber structure in which the cross-sectional shape of the yarn in the first portion is different from the cross-sectional shape of the yarn in the second portion
(2) The fiber structure in which the yarn density in the first portion is different from the yarn density in the second portion

### Reference Signs List

- P1: pitch between yarns in non-reinforced portion
- P2: pitch between yarns in reinforced portion
- R: main axis of yarn
- K3: distance between straight portions of binder yarn
- Y1: longitudinal direction corresponding to one direction
- 10: fiber-reinforced composite
- 11: fiber structure
- 12: matrix resin
- 13: weft yarn
- 14: warp yarn
- 15: binder yarn
- 21 to 23: first to third weft layers
- 31 to 32: first to second warp layers
- 41: non-reinforced portion corresponding to first portion
- 51: reinforced portion corresponding to second portion
- 60: loom

## Claims

1. A fiber structure used as a reinforcement base material of a fiber-reinforced composite, the fiber structure comprising:
a multi-layered fabric including a warp layer and a weft layer, wherein
when one direction refers to a direction in which warp yarns are adjacent to each other in the warp layer or weft yarns are adjacent to each other in the weft layer,
the fiber structure comprises a first portion and a second portion, the first portion and the second portion being continuous with each other along the one direction,
each of the warp yarns forming the second portion is thicker than each of the warp yarns forming the first portion, and/or
each of the weft yarns forming the second portion is thicker than each of the weft yarns forming the first portion, and
when a pitch between the yarns refers to a distance between main axes of the yarns adjacent to each other in the one direction, the pitch between the yarns in the second portion is smaller than the pitch between the yarns in the first portion.

2. The fiber structure according to claim 1, wherein
fiber layers stacked in a thickness direction of the multi-layered fabric are bound together by a binder yarn in the thickness direction, and
when a distance between portions of the binder yarn refers to the distance between the portions, of the binder yarn, adjacent to each other in the one direction within a range of a thickness of the multi-layered fabric, the distance between the portions of the binder yarn in the second portion is different from the distance between the portions of the binder yarn in the first portion.

3. The fiber structure according to claim 1 or 2, wherein
a cross-sectional shape of a yarn in the first portion is different from a cross-sectional shape of a yarn in the second portion.

4. The fiber structure according to any one of claims 1 to 3, wherein
a yarn density in the first portion is different from a yarn density in the second portion.

5. A fiber-reinforced composite comprising a reinforcement base material formed of a fiber structure with a matrix resin impregnated into, wherein
the fiber structure is the fiber structure according to any one of claims 1 to 4.
